# EUROPÄISCHE PATENTSCHRIFT

(11) **EP 4 577 818 B1**
(45) Veröffentlichungstag und Bekanntmachung des Hinweises auf die Patenterteilung: **05.08.2026**
(21) Anmeldenummer: 24794746.8
(22) Anmeldetag: 22.10.2024
(51) Int. Cl.: G01L 21/12

(54) **VERFAHREN ZUM BETREIBEN EINES PIRANI-DRUCKSENSORS UND ANORDNUNG ZUM BETREIBEN DES PIRANI-DRUCKSENSORS**
METHOD FOR OPERATING A PIRANI PRESSURE SENSOR AND ARRANGEMENT FOR OPERATING THE PIRANI PRESSURE SENSOR
PROCÉDÉ DE FONCTIONNEMENT D'UN CAPTEUR DE PRESSION PIRANI ET AGENCEMENT POUR FAIRE FONCTIONNER LE CAPTEUR DE PRESSION PIRANI

(30) Priorität: 14.11.2023 DE 102023131656
(43) Veröffentlichungstag der Anmeldung: 02.07.2025
(73) Patentinhaber: VACOM Vakuum Komponenten & Messtechnik GmbH, 07751 Grosslöbichau (DE)
(72) Erfinder: KIRSCH, Kristian, 07745 Jena (DE); BERTHOLD, Martin, 07745 Jena (DE); FARAONE, Matteo, 07745 Jena (DE); VOGZ, Rick, 99423 Weimar (DE); TRÜTZSCHLER, Andreas, 07749 Jena (DE); BERGNER, Klaus, 07586 Bad Köstritz (DE)
(74) Vertreter: Meissner Bolte Partnerschaft mbB
(86) Internationale Anmeldenummer: PCT/EP2024/079776
(87) Internationale Veröffentlichungsnummer: WO 2025/103714

(56) Entgegenhaltungen:
- KOUROSH KHOSRAVIANI ET AL: "The nanogap pirani - a pressure sensor with superior linearity in atmospheric pressure range", IEEE 21ST INTERNATIONAL CONFERENCE ON MICRO ELECTRO MECHANICAL SYSTEMS, 2008 : MEMS 2008 ; 13 - 17 JAN. 2008, TUCSON, ARIZONA, USA, PISCATAWAY, NJ : IEEE OPERATIONS CENTER, 1 January 2008 (2008-01-01), pages 900 - 903, XP031210892, ISBN: 978-1-4244-1792-6
- WENG P K ET AL: "MICRO-PIRANI VACUUM GAUGE", REVIEW OF SCIENTIFIC INSTRUMENTS, AMERICAN INSTITUTE OF PHYSICS, 2 HUNTINGTON QUADRANGLE, MELVILLE, NY 11747, vol. 65, no. 2, 1 February 1994 (1994-02-01), pages 492 - 499, XP000439446, ISSN: 0034-6748, DOI: 10.1063/1.1145163

## Beschreibung

Die Erfindung betrifft ein Verfahren zum Betreiben eines Pirani-Drucksensors nach Anspruch 1 und eine Anordnung zum Betreiben eines Pirani-Drucksensors nach Anspruch 7.

Die Messung des Druckes in einem gegebenen Vakuum ist ein unverzichtbarer Bestandteil vieler Anwendungen in Industrie und Wissenschaft. Die dabei eingesetzten Vakuumsensoren unterscheiden sich dadurch, dass diese bei verschiedenen Druckbereichen unterschiedlich gut einsetzbar sind. In der Regel sind der Verwendung des Vakuumsensors eines bestimmten Typs durch Einschränkungen in Bezug auf Genauigkeit, Empfindlichkeit und dem jeweils optimalen Messbereich des zu messenden Drucks Grenzen gesetzt. Soll ein besonders großer Messbereich, beispielsweise im Bereich zwischen Grob-Vakuum, Fein-Vakuum, Hoch-Vakuum bis hinein in ein Extra-Hoch-Vakuum messtechnisch erfasst werden, so lässt sich das praktisch nur durch den kombinierten Einsatz verschiedener Sensortechnologien erreichen. Zum Messen des Drucks über viele Größenordnungen hinweg werden in der Regel so genannte Weitbereichssensoren einsetzt. Diese Sensoren kombinieren verschiedene Messprinzipien. So kann der Druck als kontinuierliche Größe schließlich an einem Gerät abgelesen werden, das allerdings verschiedene Sensortechnologien in sich vereinigen muss oder dazu kompatibel ist.

Zur Messung des Drucks eines Vakuums sind Drucksensoren vom Pirani-Typ bekannt und weit verbreitet. Bei einem Pirani-Drucksensor wird die Eigenschaft ausgenutzt, dass die Wärmeleitfähigkeit von Gasen in bestimmten Druckbereichen vom Gasdruck abhängt. Je höher der umgebende Gasdruck ist, umso größer ist die Wärmeleitfähigkeit des Mediums, je niedriger der Gasdruck ist, umso schlechter wird die Wärme von einer heißen Oberfläche abgeführt.

Auf der gegebenen heißen Oberfläche stellt sich bei einer bestimmten zugeführten elektrischer Leistung, d.h. bei einer bestimmten Wärmezufuhr Wärme, und durch die druckabhängige Wärmeabgabe an das umgebende Medium eine Gleichgewichtstemperatur ein. Dies bildet die Grundlage der Druckmessung mittels eines Pirani-Drucksensors.

Bei einem Pirani-Drucksensor wird die heiße Oberfläche insbesondere durch einen Glühdraht oder durch einen in einem so genannten MEMS-Chip integrierten elektrischen Widerstand realisiert. Die bei einer festen elektrischen Leistungsbeaufschlagung vorliegende Gleichgewichtstemperatur des Glühdrahtes oder des auf einem MEMS-Chip angeordneten integrierten Widerstands hängt unter diesen Bedingungen von der thermischen Leitfähigkeit des umgebenden Mediums ab. Aus der Messung der Temperatur des Glühdrahtes oder des Widerstands kann somit auf den Druck des umgebenden Mediums geschlossen werden. Die Temperatur des Glühdrahtes oder des Widerstands wird dabei über dessen elektrischen Widerstand bestimmt. Der Glühdraht bzw. der Widerstand fungiert somit als ein Widerstandsthermometer.

Der elektrische Widerstand ist somit ein Maß für die Temperatur des Glühdrahtes bzw. des Widerstandsbauteils, die Temperatur schließlich ist wiederum ein Maß für den Druck des Mediums. Somit kann aus dem Widerstand bei einer fest angelegten elektrischen Leistungszufuhr der Druck des umgebenden Mediums bestimmt werden.

Beispiele für Pirani-Druckmesssensoren sind in den Druckschriften GB 2105472 A, US 6,945,119 B2, DE 4 324 119 C2 und EP 1 552 265 B1 offenbart.

Das Messprinzip eines Pirani-Drucksensors ist somit gut beherrschbar, die verwendete Technik des prinzipiellen Grundaufbaus ist aufwandsarm und kommt ohne mechanisch bewegliche Teile aus. Außerdem bieten Pirani-Drucksensoren eine breite Messbereichsabdeckung von Hochvakuum bis Atmosphärendruck. Aufgrund des Arbeitsprinzips eignet sich eine Pirani-Drucksensorik allerdings eher für niedrige Drücke. Bei höheren Drücken nimmt der Anteil des Wärmeaustauschs mit dem umgebenden Medium über konvektive Prozesse gegenüber der reinen Wärmeleitung zu.

Bei Pirani-Sensoren auf der Grundlage der MEMS-Drucksensortechnik treten konvektive Effekte wegen der geringen Abmessungen in der Regel nicht auf. Dadurch ist der Messbereich bei MEMS-Piranisensoren gegenüber klassischen Draht-Piranisensoren eingeschränkt.

In der Regel ist die Konvektion im Gegensatz zur Wärmeleitung abhängig von der konkreten Geometrie und der Einbausituation des Pirani-Drucksensors. Dadurch wird die Druck-Temperatur-Kennlinie des konkreten Pirani-Drucksensors abhängig von der jeweiligen Einbaulage, was die präzise Druckmessung über den gesamten Messbereich erschwert. Die Druckmessung ist bei höheren Drücken somit insgesamt weniger zuverlässig und stärker fehlerbehaftet.

Der Druckmessbereich bekannter Pirani-Sensoren ist somit faktisch relativ eingeschränkt, die Genauigkeit der Pirani-Sensoren sowie die Reproduzierbarkeit der Messergebnisse sind teilweise verbesserungswürdig. Pirani-Sensoren sind außerdem relativ empfindlich gegenüber wechselnden Umwelteinflüssen.

Zur Realisierung einer Pirani-Sensorik werden insbesondere so genannte MEMS-Chips eingesetzt. MEMS steht dabei für "micro electrical mechanical systems". Derartige Chips sind in der Regel in so genannten TO-Gehäusen verbaut, d.h. geklebt, geglast und gebondet. TO steht dabei für eine Gehäuseform, die aus der Transistortechnik entlehnt worden ist. MEMS-Chips für eine Pirani-Sensorik enthalten in der Regel einen Messwiderstand, dessen Temperatur entsprechend dem Pirani-Messprinzip bestimmt wird. Dieser ist auf dem Chip von einer Cavität umgeben, die einen Anschluss an das zu messende Medium des Vakuums hat. Die Wärmeleitung zwischen dem Messwiderstand und dem Chipkörper über das in der Cavität befindliche Medium, d.h. dem Gas, ist dann ein Maß für den gemessenen Druck. Zusätzlich kann auf dem MEMS-Chip ein Referenzwiderstand vorhanden sein. Derartige MEMS-Chips sind vorwiegend zur Anwendung im Feinvakuum geeignet.

Die Stabilität der Messung in der Pirani-Druckmesssensorik hängt insbesondere von Temperaturschwankungen in der Umgebung ab. Aus dem Stand der Technik sind dazu verschiedene Lösungsansätze bekannt, um diese Einflüsse auszugleichen.

In GB 2105472 A, US 5,608,168 A1 oder auch WO 2000/054018 A1 wird vorgeschlagen, die Pirani-Sensorik bei einer konstanten Temperatur zu betreiben, d.h. eine Einregelung auf eine konstante Temperatur vorzunehmen. Dafür wird die Leistungsbeaufschlagung der Sensorik aktiv eingestellt, sodass die Temperatur im Glühdraht konstant bleibt. Bei dieser Betriebsweise ist die bei dieser Regelung zugeführte Leistung ein Maß für die in das Medium abgeführte Wärme, somit für die thermische Leitfähigkeit des Mediums und schließlich den im Medium herrschenden Druck. Letztlich wird bei einer solchen Vorgehensweise auch die Temperatur des Glühdrahtes bestimmt, wobei aber die beaufschlagte Leistung ein indirektes Maß dafür ist, wie stark ein fest eingestellter Temperaturunterschied zwischen Glühdraht und Umgebungsmedium nachgeregelt werden muss.

Bekannt ist auch eine Messmethodik, bei der die Änderung des elektrischen Widerstandes im Glühdraht gemessen wird, wenn diesem impulsartig Leistung zugeführt wird. Die zeitliche Abklingkurve, d.h. die Relaxation des Glühdrahtes auf eine bestimmte Temperatur, gibt dann einen Aufschluss über die Wärmeleitfähigkeit des umgebenden Mediums und somit auf den zu messenden Druck.

Weitere Pirani- Sensoren werden in den Schriften KOUROSH KHOSRAVIANI ET AL: "The nanogap pirani - a pressure sensor with superior linearity in atmospheric pressure range",IEEE 21ST INTERNATIONAL CONFERENCE ON MICRO ELECTRO MECHANICAL SYSTEMS, 2008 : MEMS 2008 ; 13 - 17 JAN. 2008, TUCSON, ARIZONA, USA, PISCATAWAY, NJ : IEEE OPERATIONS CENTER, 1. Januar 2008 (2008-01-01), Seiten 900-903, ISBN: 978-1-4244-1792-6 und WENG P K ET AL: "MICRO-PIRANI VACUUM GAUGE",REVIEW OF SCIENTIFIC INSTRUMENTS, AMERICAN INSTITUTE OF PHYSICS, 2 HUNTINGTON QUADRANGLE, MELVILLE, NY 11747, Bd. 65, Nr. 2, 1. Februar 1994 (1994-02-01), Seiten 492-499, ISSN: 0034-6748, DOI: 10.1063/1.1145163 offenbart.

Es stellt sich die Aufgabe, eine Pirani-Messanordnung und ein Verfahren zur Druckmessung mittels eines Pirani-Sensors anzugeben, bei dem der Messbereich des Pirani-Drucksensors erweitert wird, Schwankungen der Umgebungstemperatur zuverlässiger ausgeglichen werden und eine vorhandene Messsensorik über einen Druckbereich genutzt werden kann, der den ursprünglichen Druckbereich deutlich erweitert. Es soll insbesondere für Pirani-Drucksensoren nach dem MEMS-Prinzip erreicht werden, dass die den Druckbereich eigentlich begrenzende Abwesenheit der Konvektionseffekte nicht mehr hinderlich ist, sodass auch für MEMS-Sensoren der für die Messung verfügbare Druckbereich erweitert wird.

Die Aufgabe wird mit einem Verfahren zum Betreiben eines Pirani-Drucksensors mit den Merkmalen des Anspruchs 1 und einer Anordnung zum Betreiben eines Pirani-Drucksensors mit den Merkmalen des Anspruchs 7 gelöst. Die jeweiligen Unteransprüche enthalten zweckmäßige und/oder vorteilhafte Ausführungsformen von Verfahren und Anordnung.

Das Verfahren zum Betreiben eines Pirani-Drucksensors mit einem Messwiderstand und einem den Messwiderstand umgebenden Messvolumen, wobei der Messwiderstand mit einer elektrischen Leistung beaufschlagt wird und sich eine Gleichgewichtstemperatur des Messwiderstandes im Medium des Messvolumens einstellt, erfolgt erfindungsgemäß so, dass durch eine Steuereinheit bei der Druckmessung ein Umschalten zwischen einem ersten Messmodus und einem zweiten Messmodus ausgeführt wird. In dem ersten Messmodus erfolgt eine Beaufschlagung des Messwiderstands mit einer definierten Maximalleistung Pmax, die sich aus den Materialgrenzwerten ergibt, wobei die Temperatur des Messwiderstands als Messgröße des zu bestimmenden Druckes ermittelt wird, in dem zweiten Messmodus wird die Temperatur des Messwiderstands auf einer Maximaltemperatur fixiert, wobei die zur Aufrechterhaltung der Maximaltemperatur erforderliche Leistung als Messgröße des zu bestimmenden Druckes ermittelt wird.

Grundgedanken des erfindungsgemäßen Verfahrens ist es, einen gegebenen Pirani-Drucksensor so zu betreiben, dass dessen technischer Aufbau maximal ausgeschöpft wird. Dies geschieht zum einen, indem in dem ersten Messmodus der Messwiderstand des Pirani-Drucksensors bis zu einer maximalen Temperatur, die sich aus den Materialgrenzwerten ergibt, erwärmt wird. Diese maximale Temperatur ergibt sich insbesondere aus den Materialgrenzwerten des gegebenen Pirani-Drucksensors. Diese maximale Temperatur stellt sich vor allem bei einem abnehmenden Druck im Messvolumen bei einem gewissen Minimaldruck ein. Sobald diese Maximaltemperatur erreicht ist, wird die Temperatur an dem Messwiderstand fixiert und der Messwiderstand in einem zweiten Messmodus betrieben. Nun wird die Temperatur des Messwiderstandes konstant gehalten und die Leistungszufuhr an den Messwiderstand so reguliert, dass die Temperatur auch bei weiter abnehmendem Druck stabil bleibt. In dem ersten Messmodus dient somit die Temperatur des Messwiderstandes als Messgröße zur Bestimmung des Drucks, in dem zweiten Messmodus ist es die zugeführte Leistung zum Aufrechterhalten der Temperatur des Messwiderstandes, die als Messgröße des Druckes ausgewertet wird. Das Umschalten zwischen dem ersten und dem zweiten Messmodus ermöglicht es, einen gegebenen Pirani-Drucksensor auch unterhalb der eigentlich vorgegebenen Druckbereiche noch für eine Druckmessung einzusetzen und auch bei besonders niedrigen Drücken ein stabiles und verwertbares Messsignal mit einer hinreichenden Signalstärke zu gewinnen.

Das Verfahren zielt somit darauf ab, ein maximal mögliches Drucksignal zu generieren und für eine messtechnische Verarbeitung verfügbar zu machen, indem eine maximal zulässige gerätemäßigen Schwelle für einen gegebenen Pirani-Drucksensor ausgenutzt wird.

Bei einer zweckmäßigen Ausführungsform wird das Verfahren mit folgenden Schritten ausgeführt:
Bei einer Veränderung des Drucks im Rezipienten, d.h. innerhalb des Messvolumens, wird die elektrische Leistungszufuhr erhöht und die Temperatur im Messwiderstand gemessen. Hierdurch wird ein hinreichend starkes Messsignal im ersten Messmodus erreicht.

Es erfolgt nun eine Betriebsteuerung des Messwiderstands mittels einer Steuereinheit bis zum Erreichen eines Schwellzustands mit einer definierten Maximaltemperatur und/oder einer definierten zugeführten Maximalleistung mit dem ersten Messmodus oder dem zweiten Messmodus.

Dabei wird bei dem ersten Messmodus in einem ersten Druckbereich bei Erreichen der Maximalleistung die Leistungszufuhr auf den Maximalwert fixiert und der Druck im Messvolumen über eine Messung der Temperatur im Messwiderstand bestimmt.

Wird in dem Messwiderstand eine Maximaltemperatur erreicht, erfolgt ein Umschalten in den zweiten Messmodus. Im zweiten Messmodus wird die Temperatur auf die Maximaltemperatur fixiert und es wird die bei dieser Maximaltemperatur jeweils an den Messwiderstand zugeführte Leistung bestimmt.

Die Maximaltemperatur kann dabei je nach den Messverhältnissen auf zwei Arten erreicht werden. Zum einen stellt sich die Maximaltemperatur bei einer Reduzierung des Druckes im Messvolumen schon durch die Abnahme der thermischen Leitfähigkeit im Medium ein. Durch das Umschalten in den zweiten Messmodus wird nun erreicht, dass auch Druckmessungen bei noch niedrigeren Drücken stattfinden können. Zum anderen kann die Maximaltemperatur auch durch Änderungen in der Umgebungstemperatur des Pirani-Drucksensors erreicht werden. In einem solchen Fall wird situativ durch das Umschalten in den zweiten Messmodus ein Ausgleich der schwankenden Umgebungstemperatur erreicht.

Bei einer Ausführungsform werden der erste Messmodus bei einem höheren ersten Druckbereich und der zweite Messmodus bei einem niedrigeren zweiten Druckbereich ausgeführt, wobei durch die Steuereinheit ein selbsttätiges Umschalten zwischen dem ersten Messmodus und dem zweiten Messmodus erfolgt, wobei die Druckbereiche in beide Richtungen durchfahrbar sind.

Schaltungsbedingt kann es auch dazu kommen, dass sich die beiden Druckbereiche überschneiden bzw. dass es in Abhängigkeit von der Richtung der durchlaufenen Druckbereiche zu einer Schalthysterese kommt. In diesem Übergangsbereich wird bei einer Ausführungsform durch die Steuereinheit beim Durchfahren der Druckbereiche der erste Messmodus oder der zweite Messmodus ausgeführt. Das kann für eine druckabhängige Schalthysterese zwischen dem ersten Messmodus und dem zweiten Messmodus genutzt werden.

Als Pirani-Drucksensor wird bei einer Ausführungsform eine Anordnung aus einem MEMS-Chip mit einer auf dem MEMS-Chip angeordneten Cavität als Messvolumen und einer ersten Leiterstruktur als Messwiderstand verwendet. Ein MEMS-Chip erweist sich für die Ausführung des Verfahrens als besonders vorteilhaft, insbesondere, weil ein auf dem Chip angeordnete Referenzwiderstand eine unabhängige Temperaturmessung erlaubt.

Eine Anordnung zum Betreiben eines Pirani-Drucksensors umfasst einen Messwiderstand, ein den Bereich des Messwiderstandes mindestens teilweise umgebendes Messvolumen und eine Steuereinheit zur Betriebssteuerung des Messwiderstandes. Die Steuereinheit enthält eine Steuerung zur elektrischen Leistungsbeaufschlagung des Messwiderstandes, eine Messeinheit zum Erfassen des Widerstandswertes des Messwiderstandes mit einem ersten Kalibrier-Speicher für eine gespeicherte Temperatur-Kalibrierfunktion zum Umsetzen des Widerstandswertes in einem Temperaturwert und des Temperaturwertes in einen Wert für einen Messdruck bei einer vorgegebenen Leistungsbeaufschlagung. Diese Anordnung ist so ausgeführt, dass die Steuereinheit eine Leistungs-Messeinheit für eine an den Messwiderstand beaufschlagte elektrische Leistung und einen zweiten Kalibrier-Speicher mit einer gespeicherten Leistungs-Kalibrierfunktion zum Umsetzen einer bei einer festen Temperatur zugeführten elektrischen Leistung in einen Messdruck enthält. Weiterhin weist die Steuereinheit ein Umschaltmittel zwischen einer Druckmessung über die Temperatur-Kalibrierfunktion und einer Druckmessung über die Leistungs-Kalibrierfunktion auf.

Die Steuereinheit ist somit so ausgeführt, dass damit zwei Messmodi ausführbar sind: zum einen die Ermittlung einer Temperatur des Messwiderstandes über die Ermittlung des Widerstandswerte bei einer fest vorgegeben elektrischen Leistung, zum anderen zur Ermittlung einer veränderlichen elektrischen Leistungsbeaufschlagung sind Sichern einer konstanten Temperatur. Hierfür weist die Steuereinheit ein Umschaltmittel auf.

Das Umschaltmittel sowie die Kalibrierfunktionen können schaltungstechnisch, wie auch in Form eines Programmcodes ausgeführt sein. Bei einer Ausführungsform weist die Steuereinheit einen Programmcode zum Realisieren der Temperatur-Kalibrierfunktion, der Leistungs-Kalibrierfunktion und/oder des Umschaltmittels auf.

Bei einer Ausführungsform ist der Pirani-Drucksensor als ein MEMS-Chip ausgebildet, bei dem der Messwiderstand als eine erste Leiterbahn, eine zu der ersten Leiterbahn benachbarte Cavität als ein Messvolumen und eine zweite Leiterbahn als ein Referenzthermometer vorgesehen ist.

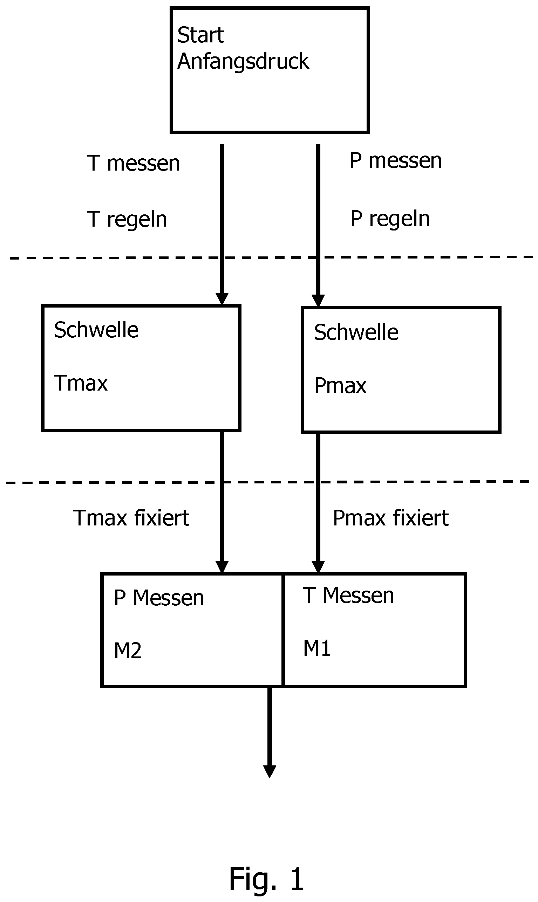

Das erfindungsgemäße Verfahren und die Anordnung zum Ausführen des Verfahrens sollen nachfolgend anhand von Ausführungsbeispielen näher erläutert werden. Zur Verdeutlichung dienen die beigefügten Figuren 1 bis 8. Es werden für gleiche und/oder gleichwirkende Bestandteile die gleichen Bezugszeichen verwendet.

Es zeigt:
- Fig. 1: einen schematischen Ablauf des erfindungsgemäßen Verfahrens,
- Fig. 2: eine Abfolge der einzelnen Messmodi in Abhängigkeit vom umgebenden Druck des Vakuums,
- Fig. 3: ein Durchlaufen der Messmodi des Messverfahrens bei abnehmendem Druck mit dem Durchlaufen eines Übergangsbereiches,
- Fig. 4: ein Durchlaufen der Messmodi des Messverfahrens bei zunehmendem Druck mit dem Durchlaufen des Übergangsbereiches,
- Fig. 5: beispielhafte Verläufe des Messwiderstandes und der zugeordneten elektrischen Leistung in Abhängigkeit vom Druck im ersten und zweiten Messmodus,
- Fig. 6: beispielhafte Verläufe des Messwiderstandes und der zugeordneten elektrischen Leistung in Abhängigkeit vom Druck im ersten und zweiten Messmodus mit einem Übergangsbereich,
- Fig. 7: eine beispielhafte Steuereinheit in Kopplung mit einem Pirani-Druckmesssensor,
- Fig. 8: einen beispielhaften MEMS-Chip zur Verwendung als Pirani-Drucksensor.

Das Verfahren verfolgt in seinen nachfolgend beschriebenen Ausführungsformen verschiedene Ziele und Ansätze. Ein erstes Ziel besteht darin, eine im Bereich des Pirani Drucksensors auftretende Temperaturschwankung ohne zusätzliche physikalische Mess- und Regelschleifen empirisch auszugleichen. Klassische, aus dem Stand der Technik bekannte Pirani-Drucksensoren in Form eines Glühdrahtes können keine Umgebungstemperaturen messen. Daher wird bei einer Ausführungsform auf einen Pirani-Druckmesssensor in Form eines MEMS-Chips zurückgegriffen, der eine zweite Mäanderstruktur einer Leiterbahn aufweist. Mit dieser lassen sich Umgebungstemperaturen bestimmen.

Ein zweites Ziel ist die Einrichtung des gesamten Messsystems auf ein maximales Messsignal je vorliegendem Druckbereich, insbesondere bei Verwendung eines MEMS-Chips als Pirani-Drucksensor. Das hier erläuterte Verfahren erlaubt das Messen bei einer Temperaturdifferenz von beispielsweise bis zu 250 K (Anwendungsbeispiel für einen Spezifischen MEMS Pirani Sensor) bei sehr niedrigen Drücken. Der hier genannten Temperaturwert ist lediglich beispielhaft und hängt vom jeweils konkret vorliegenden MEMS-Drucksensor ab. Es handelt sich um ein Feedbacksystem, bei dem beim Anfahren der Druckbereich in etwa ermittelt wird, wobei im Ergebnis mit einer maximal zulässigen Spannung am Pirani-Sensor gemessen werden kann. Hierdurch wird die Signalstärke im jeweiligen Druckbereich im Vergleich zu bekannten Messverfahren erhöht.

Fig. 1 zeigt einen schematischen Ablauf des erfindungsgemäßen Verfahrens. Die nachfolgend beschriebenen Verfahrensschritte und Abläufe zielen darauf ab, zum einen den Messbereich eines Pirani-Drucksensors zu erweitern, sodass insbesondere niedrigere Drücke als bei den im Stand der Technik üblicherweise verwendeten Pirani-Sensoren gemessen werden können. Andererseits soll durch das Verfahren gesichert werden, dass auch veränderte Umgebungsbedingungen, insbesondere veränderte Temperaturen im Vakuum des Mediums oder auch einer in der Nähe befindlichen Behälterwand, ausgeglichen werden können. Das Verfahren zielt also auch auf eine Stabilisierung des Messprozesses ab. Das bedeutet insbesondere, dass ein Wechsel zwischen dem ersten Messmodus und dem zweiten Messmodus sowohl in Abhängigkeit vom Druck des umgebenden Vakuums als auch unabhängig vom Druck ausgelöst werden kann.

Bei der Darstellung in Fig. 1 wird zunächst von einem gegebenen Anfangsdruck ausgegangen, in dem ein gegebener Pirani-Drucksensor für eine Druckmessung ausgelegt ist. Der Pirani-Drucksensor kann dabei so betrieben werden, dass dieser mit einer veränderlichen elektrischen Leistung P beaufschlagt wird. Parallel dazu läuft der eigentliche Messprozess unter Verwendung des Pirani-Sensors ab. Dieser besteht beispielsweise darin, dass die Temperatur T des Messwiderstandes des Pirani-Sensors bei einer bestimmten Leistungsbeaufschlagung ermittelt und daraus der Druck im umgebenden Vakuum bestimmt wird. Wie vorhergehend erläutert erfolgt die Temperaturbestimmung über die Bestimmung des aktuellen elektrischen Widerstandswertes R des Messwiderstandes und dessen Übertragung in den Temperaturwert.

Beim Ablauf des Messprozesses des Pirani-Drucksensors können nun im Zusammenhang mit dem konkreten Messverlauf zwei Grenzfälle eintreten, in denen der Pirani-Drucksensor maximal belastet wird. In einem ersten Grenzfall wird eine Maximaltemperatur Tmax des Messwiderstandes des Sensors erreicht. Diese Maximaltemperatur ist vorab definiert und in einer Steuereinheit zum Betreiben des Pirani-Sensors als ein Wert vorgegeben. In einem solchen Fall wird der Pirani-Sensor in einem Messmodus M2 weiterbetrieben. Dieser erfolgt so, dass die Maximaltemperatur Tmax im Messwiderstand des Pirani-Sensors konstant gehalten und im weiteren Messverlauf die auf den Pirani-Sensor zum Aufrechterhalten dieser Maximaltemperatur Tmax erforderliche Leistung als Messgröße für den im Vakuum herrschenden Druck ermittelt und in den entsprechenden Druckwert umgerechnet wird.

Möglich ist aber auch ein zweiter Grenzfall, bei dem der Messwiderstand des Pirani-Sensors mit einer Maximalleistung Pmax beaufschlagt wird. Diese Maximalleistung Pmax bestimmt sich in einfacher Weise aus der an dem Messwiderstand abfallenden Spannung und der den Messwiderstand durchfließenden Stromstärke. Sie ist ebenfalls in der Steuereinheit zum Betreiben des Pirani-Sensors vorgegeben und ergibt sich beispielsweise aus dem jeweils verwendeten Modell des Pirani-Sensors. In einem solchen Fall wird der Pirani-Sensor in einem Messmodus M1 betrieben. Dabei wird die beaufschlagte Leistung auf den Maximalwert Pmax durch die Steuereinheit fixiert und die Temperatur T des Messwiderstandes als Messgröße zur Bestimmung des Druckes im umgebenden Vakuum ermittelt und ausgewertet.

Es ist ein wesentlicher Gedanke, mittels des hier erläuterten Verfahrens einen gegebenen Pirani-Drucksensor entweder bei einer Maximaltemperatur oder bei einer maximalen Leistungsbeaufschlagung zu betreiben, um so das erhaltene Messsignal zu maximieren und den Messbereich des Pirani-Drucksensors zu erweitern.

Es ist zu betonen, dass die Bezeichnungen "erster Messmodus M1" und "zweiter Messmodus M2" keinerlei Rangordnung zwischen den beiden Modi bezeichnen. Der Pirani-Sensor wird unter jeweils konkret vorhandenen Bedingungen eingesetzt, wobei in einem Anfangsprozess die an dem Messwiderstand des Sensors angelegte Leistung schrittweise erhöht wird. Das Betreiben des Pirani-Sensors in dem Messmodus M1 oder dem Messmodus M2 erfolgt je nachdem, ob entweder die Maximalleistung Pmax oder die Maximaltemperatur Tmax am Messwiderstand erreicht worden ist.

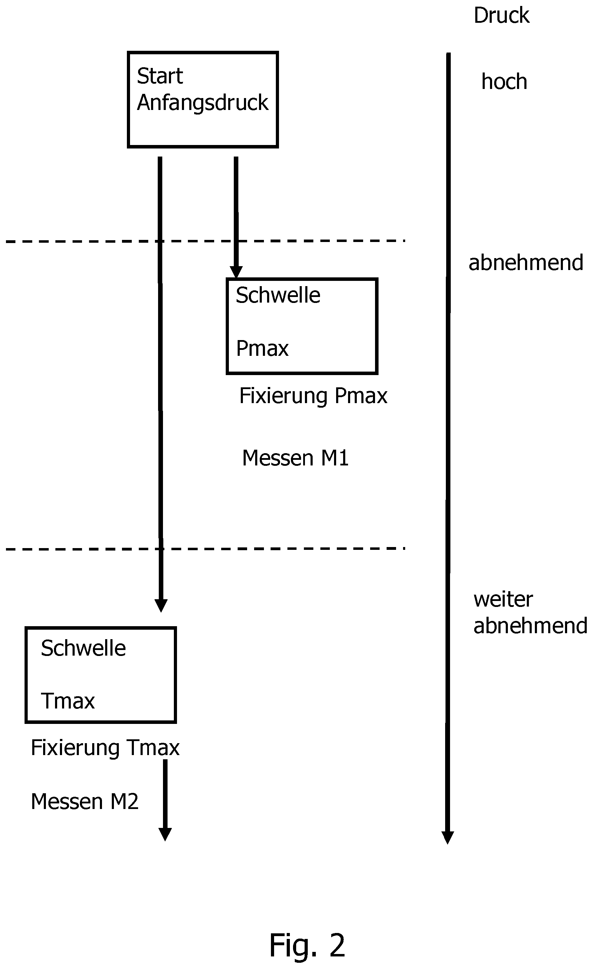

Der Wechsel zwischen dem ersten Messmodus M1 und dem zweiten Messmodus M2 kann vor allem dann auftreten, wenn der Druck in einem Vakuum abgesenkt wird. Fig. 2 zeigt hierzu ein entsprechendes Beispiel. Bei der Darstellung in Fig. 2 wird zunächst von einem Volumen ausgegangen, in dem ein hinreichend hoher Druck herrscht, wie dies beispielsweise im atmosphärischen Druckbereich oder im Grobvakuum vorliegt. In diesem Bereich wird zunächst der Pirani-Sensor mit einer bestimmten elektrischen Leistung P beaufschlagt. Die elektrische Leistung wird dabei auf eine Maximalleistung Pmax fixiert, die sich an der oberen Belastungsgrenze des Pirani-Sensors orientiert.

Der Messwiderstand des Pirani-Sensors nimmt dabei eine Gleichgewichtstemperatur an, die sich durch die Wärmeleitung mit dem umgebenden Medium einstellt. Diese Gleichgewichtstemperatur wird gemessen. Sie ist ein Maß für den Druck des Mediums. Darin besteht das Messprinzip des Messmodus M1.

Bei einem weiter abnehmenden Druck, d.h. einem zunehmenden Vakuum, nimmt auch die Wärmeleitfähigkeit des umgebenden Mediums ab. Bei einer fest eingestellten Beaufschlagung mit einer Maximalleistung Pmax steigt entsprechend die Temperatur im Messwiderstand mit abnehmendem Druck des umgebenden Mediums an. Der Messbereich des Pirani-Sensors ist hierdurch bei niedrigen Drücken durch eine Maximaltemperatur begrenzt.

Bei dem erfindungsgemäßen Verfahren wird der Messbereich zu niedrigen Drücken hin erweitert. Sobald die Steuereinheit eine maximale Temperatur Tmax am Messwiderstand registriert, schaltet diese in den Messmodus M2. Dieser besteht darin, dass die erreichte für den Pirani-Sensor mögliche Maximaltemperatur Tmax fixiert wird. Der Messmodus M2 verläuft nun so, dass bei weiter abfallenden Drücken des Vakuums der Pirani-Sensor so angesteuert wird, dass die bestehende Maximaltemperatur Tmax am Messwiderstand aufrecht erhalten bleibt. Es ist nun die an den Pirani-Sensor zugeführte und für die Aufrechterhaltung der Maximaltemperatur benötigte Leistung P, die als Messgröße des Druckes fungiert. Diese wird ermittelt und zur Bestimmung des Druckes im Vakuum entsprechend einer bestehenden Kalibrierung zugrunde gelegt.

Weil bei einem weiter abnehmenden Druck die Wärmeleitfähigkeit des den Messwiderstand umgebenden Mediums weiter abnimmt und somit der Messwiderstand schlechter Wärme an das umgebende Medium abgeben kann, wird für eine gleichbleibende Temperatur Tmax des Messwiderstandes eine geringere Zufuhr an elektrischer Leistung benötigt. Damit kann bei einer weiteren Absenkung des Druckes im Bereich des Pirani-Sensors der Sensor einerseits mit einer maximalen Temperatur des Messwiderstandes betrieben werden, während gleichzeitig der Messbereich des Pirani-Sensors zu niedrigeren Drücken erweitert wird. Dadurch bleibt für die Auswertung des Messsignals verfügbare Signalstärke über sämtliche Druckbereiche hinweg hinreichend groß.

Die Wahl zwischen dem Messmodus M2 oder dem Messmodus M1 erfolgt dabei durch die Steuereinheit des Pirani-Sensors automatisiert. Das Kriterium für die Entscheidung zwischen dem Messmodus M1 und dem Messmodus M2 ist dabei, welche der beiden Maximalwerte Pmax oder Tmax bei einem konkret vorhandenen Druck bei einer wachsenden Leistungszufuhr zuerst erreicht wird. Wird zunächst die Maximalleistung Pmax erreicht, wird der Pirani-Sensor im Messmodus M1 betrieben, erreicht die Temperatur an dem Pirani-Sensor als erstes die Temperatur Tmax, wird der Messmodus M2 aktiviert.

Die Steuerung des Pirani-Sensors zielt somit darauf ab, einen gegebenen Pirani-Sensor möglichst an den Grenzen der jeweils vorrichtungsseitig zulässigen Betriebsparameter Pmax und Tmax zu betreiben.

Diese Betriebsweise ist vor allem dann zweckmäßig, wenn der Pirani-Drucksensor in einer Vakuum-Umgebung mit einem veränderlichen Druck betrieben wird, wobei der Druck über mehrere Größenordnungen hinweg verändert wird. Das Verfahren ist beispielsweise in einem Druckbereich von 10⁻⁶ mbar bis 10³ mbar anwendbar, d.h. zwischen dem Druckbereich des Hochvakuums und dem normalen atmosphärischen Druck. Das Verfahren ist besonders dazu geeignet, den Druck in einem Volumen zu verfolgen, dass alternierend evakuiert und wieder mit Druck beaufschlagt wird.

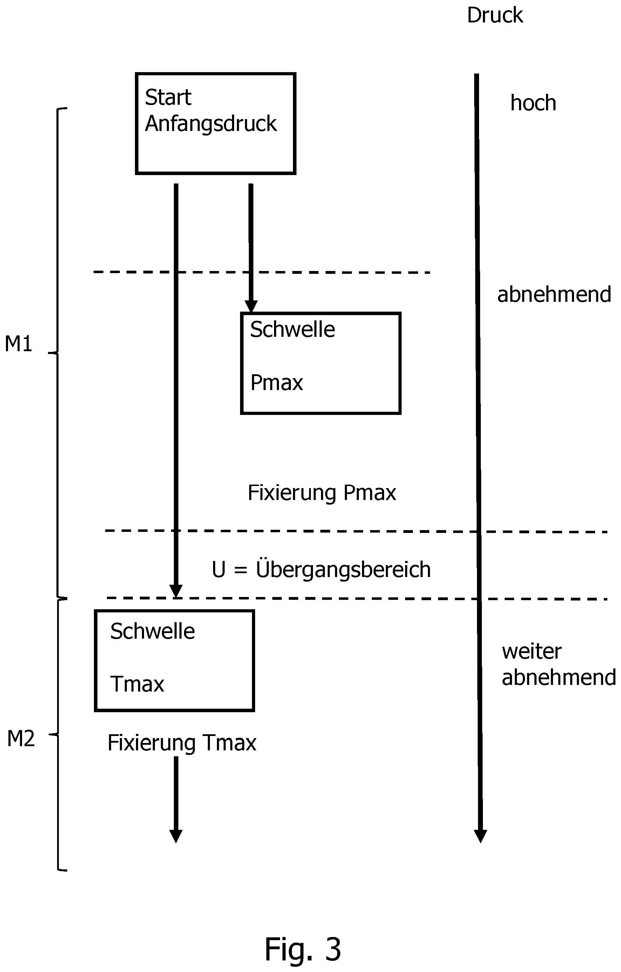

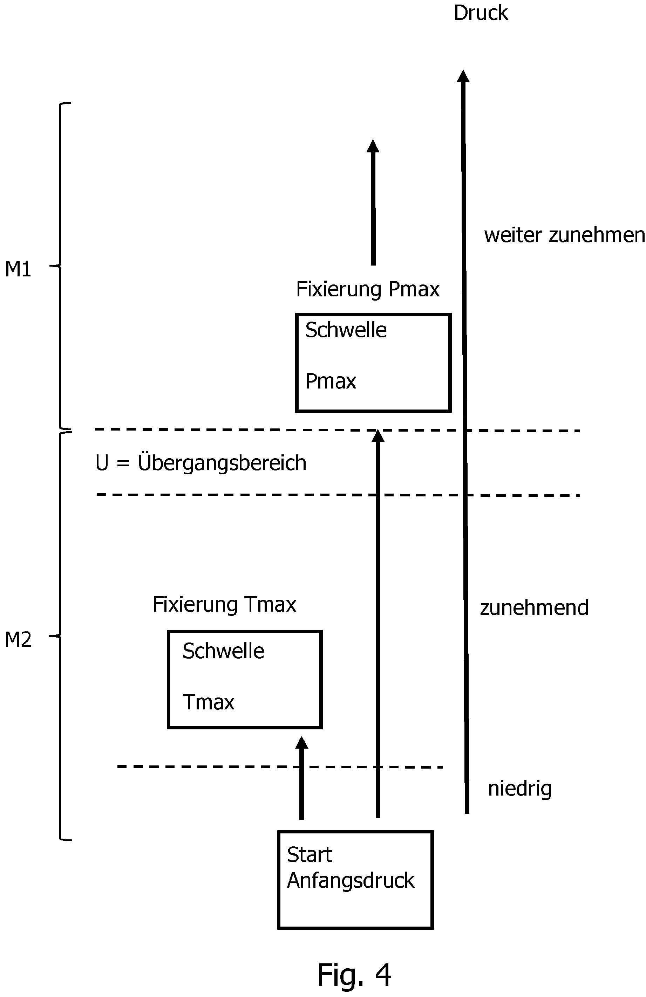

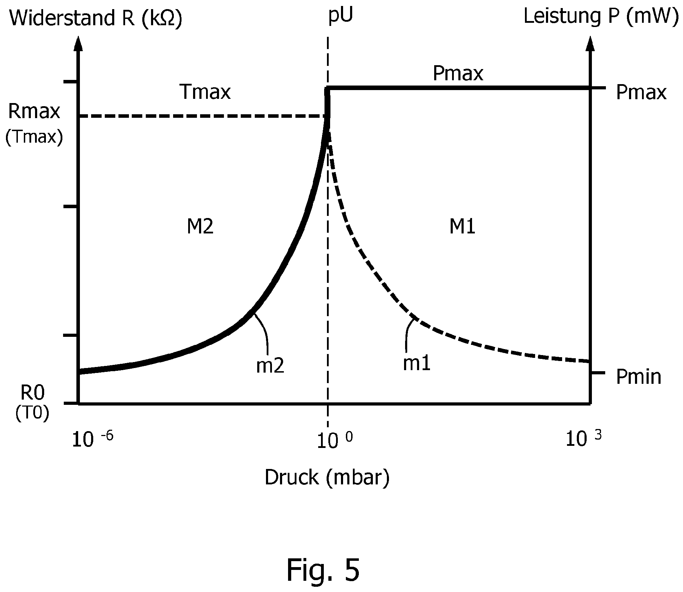

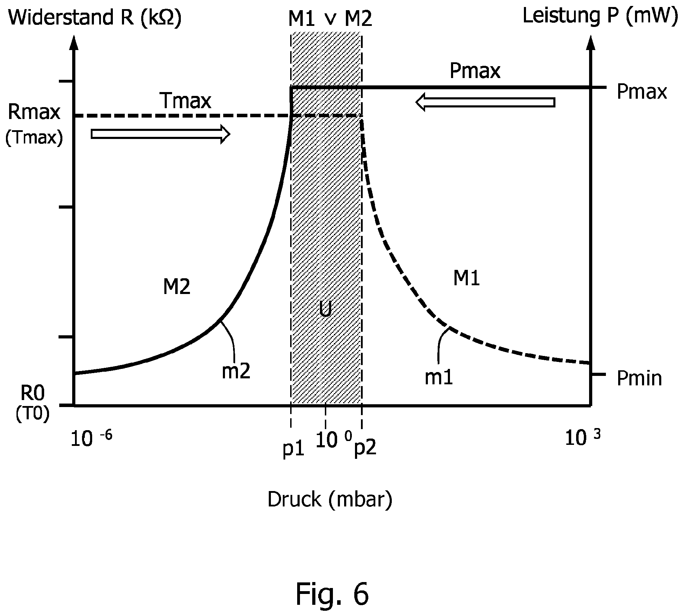

Ein Beispiel hierfür ist in den Figuren 3 und 4 gezeigt. Ergänzend hierzu sind die Druck- und Temperaturverläufe in den Figuren 5 und 6 dargestellt.

In dem Beispiel in Figur 3 wird zunächst von einem Anfangsdruck im atmosphärischen Bereich ausgegangen, wobei der Druck fortlaufend abnimmt. Fig. 4 zeigt den entgegengesetzten Druckverlauf, bei dem von einem niedrigen Druck, beispielsweise einem Hochvakuum, ausgegangen wird und der Druck im Messvolumen zunimmt, bis der Atmosphärendruck erreicht ist.

In Fig. 3 wird zunächst von einem hohen Druck, beispielsweise von einem atmosphärischen Ausgangsdruck ausgegangen, der im weiteren Verlauf abgesenkt wird. Wie beschrieben wird dabei der Pirani-Drucksensor zunächst in dem Messmodus M1 betrieben. Bei einem weiter abnehmenden Druck, insbesondere beim Erreichen eines Hochvakuums, wird durch die Steuereinheit in den Messmodus M2 umgeschaltet.

In der Darstellung in Fig. 3 befindet sich zwischen dem Druckbereich, in welchem der Messmodus M1 ausgeführt wird, und dem Druckbereich, bei dem der Messmodus M2 betrieben wird, ein Übergangsbereich U. In diesem Übergangsbereich ist es möglich, den Pirani-Drucksensor sowohl in dem Messmodus M1 als auch in dem Messmodus M2 zu betreiben. Welcher der beiden Messmodi im Übergangsbereich konkret ausgeführt wird, hängt dabei insbesondere von der Richtung ab, in die Druckbereiche im Messvolumen durchlaufen werden. Bei dem Beispiel in Fig. 3 wird zunächst von einem Messbetrieb mit dem Messmodus M1 ausgegangen und dieser Messmodus wird dann auch im Übergangsbereich U beibehalten. Erst am unteren Ende, dem niedrigsten Druck des Übergangsbereiches U schaltet die Steuereinheit den Betrieb des Pirani-Drucksensors in den Messmodus M2 um.

In der Darstellung in Fig. 4 wird der Druckbereich in umgekehrter Richtung durchlaufen. Das heißt, es wird bei einem niedrigen Druck, beispielsweise im Bereich des Hochvakuums, begonnen, wobei dieser langsam erhöht wird, bis der Druck schließlich im Bereich des atmosphärischen Drucks endet. In diesem Fall wird der Pirani-Drucksensor zunächst im Messmodus M2 betrieben. Bei Zunahme des Druckes steuert die Steuereinheit den Pirani-Drucksensor auch weiterhin zunächst im Modus M2 und behält den Messmodus M2 auch innerhalb des Übergangsbereiches U bei. Erst an der oberen Grenze, also dem höchsten Druck des Übergangsbereichs U, schaltet die Steuereinheit in den Messmodus M1 um.

Die Figuren 5 und 6 zeigen jeweils in einem Diagramm eine Darstellung des elektrischen Widerstandes R am Messwiderstand des Pirani-Drucksensors und der am Messwiderstand jeweils anliegenden Leistung P. Der Widerstand R ist dabei ein direktes Maß der Temperatur des Messwiderstandes. Zu erkennen sind dabei die erwähnten Messmodi M1 und M2 sowie die in dem Messmodus M2 fixierte Maximaltemperatur Tmax und die in dem Messmodus M1 fixierte Maximalleistung Pmax. Die in dem Messmodus M1 vorliegende Funktion m1 stellt dabei eine erste Kalibierfunktion m1 dar, die in dem Messmodus M2 vorliegende Funktion m2 bildet die für den Messmodus M2 geltende Kalibrierfunktion m2. Die Diagramme in den Figuren 5 und 6 verdeutlichen, dass hier die Messbereiche des Druckes jeweils über die Kalibrierfunktionen m1 und m2 und die zugeordneten Widerstands- und Leistungswerte R und P ermittelt werden.

Die beiden Messmodi M1 und M2 hängen dabei vom Druck im Messvolumen ab. Bei einem bestimmten Umschaltdruck pU wechselt die Steuereinheit von dem Messmodus M1 in den Messmodus M2 oder umgekehrt vom Messmodus M2 in den Messmodus M1. Der Umschaltdruck pU liegt in dem Diagramm in Fig. 5 bei 10⁰ mbar. Dies ist ein lediglich beispielhafter Wert, der hier nur illustrierend zu verstehen ist.

Fig. 6 zeigt darüber hinaus den Übergangsbereich U. Es kann dabei einer der beiden verfügbaren Messmodi ausgeführt werden und es ist auch möglich, zum Beispiel einen Messmodus beim Erhöhen des Druckes und den anderen Messmodus beim Absenken des Druckes zu aktivieren. Dies ermöglicht einen Vergleich des gemessenen Druckes im Übergangsbereich zwischen den beiden Messmodi M1 und M2 bei verschiedenen Druckverläufen. Es gibt in diesem Beispiel keinen eindeutig bestimmten Übergangsdruck pU. In diesem Bereich ist es beispielsweise möglich, dass weder die Maximaltemperatur Tmax noch die Maximalleistung Pmax eindeutig registriert werden oder infolge von Änderungen in den Umgebungsbedingungen schwanken. Es liegt hier kein eindeutiger Umschaltdruck pU, sondern der Übergangsbereich U vor.

Der Übergangsbereich bedingt insbesondere eine Schalthysterese im kombinierten Widerstands- und Leistungs-Druck-Diagramm beim Durchfahren verschiedener Druckbereiche. So kann beispielsweise der Druck im Messvolumen zunächst von einem niedrigen Druck zu einem höheren Druck hochgefahren werden. Im niedrigen Druckbereich wird der Pirani-Drucksensor zunächst im Messmodus M2 betrieben. Bei einem bestimmten Umschaltdruck p1 wechselt der Messmodus wie beschrieben in den Messmodus M1.

Gegenläufig dazu ist auch ein Absenken des Druckes vom höheren Druckbereich in den niedrigeren Druckbereich möglich. Der Pirani-Drucksensor wird in diesem Fall zunächst im Messmodus M1 betrieben und der Messmodus wechselt bei einem Umschaltdruck p2 in den Messmodus M2. Dabei unterscheiden sich die Umschaltdrücke p1 und p2 in der Regel voneinander. Hierin besteht die Schalthysterese des erfindungsgemäßen Steuerungsverfahrens, die vor allem beim Durchfahren des Druckes im Messvolumen auftritt.

Der Übergangsbereich U zwischen den beiden Umschaltdrücken p1 und p2 ergibt sich somit aus einer Schalthysterese innerhalb des von der Steuereinheit ausgeführten Steuerablaufs des Pirani-Drucksensors. Die Breite des Übergangsbereichs U hängt dabei von einer Reihe von Bedingungen ab, insbesondere von der Wärmeleitfähigkeit des konkret vorliegenden Gases im Rezipienten.

Die Breite des Übergangsbereiches ergibt sich auch aus der Geschwindigkeit, mit der der Druck innerhalb des Messvolumens geändert wird sowie der dabei benötigten Zeit für das Umschalten, Einregeln und Stabilisieren des jeweiligen Messmodus. Eine vergleichsweise schnelle Druckänderung führt dabei zu einer entsprechend großen Schalthysterese und somit einem entsprechend breiten Übergangsbereich. Wird der Druck im Messvolumen jedoch nur langsam verändert und dabei durch eine Reihe von Zuständen gefahren, bei dem sich ein Quasi-Gleichgewicht zwischen der Trägheit der Steuerung des Pirani-Drucksensors und dem Druck des Mediums einstellt, kann die Breite des Übergangsbereichs deutlich reduziert werden.

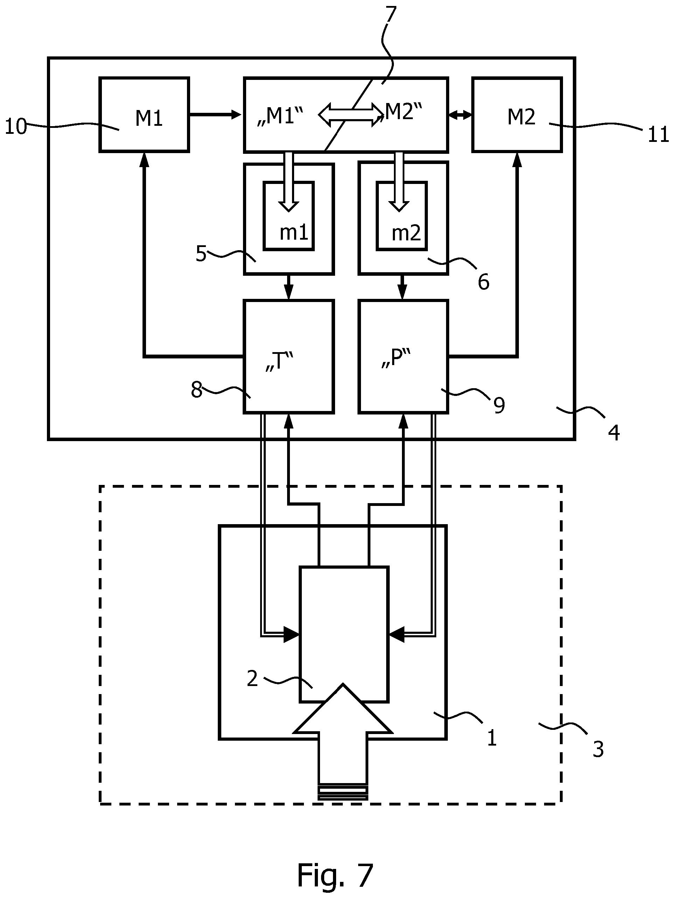

Fig. 7 zeigt ein beispielhaftes Blockdiagramm für eine Verschaltung einer Steuereinheit mit einem Pirani-Drucksensor. Fig. 7 zeigt einen beispielhaften Pirani-Drucksensor 1 mit einem im Bereich des Drucksensors angeordneten Messwiderstand 2. Der Pirani-Drucksensor 1 befindet sich in einem umgebenden Messvolumen 3.

Der Messwiderstand 2 wird mit einer elektrischen Leistung P beaufschlagt. Die elektrischen Leistung P ist dabei wie bekannt das Produkt aus einer an dem Messwiderstand abfallenden Spannung und einer dabei diesen Messwiderstand durchfließenden Stromstärke.

Zur Beschaltung des Pirani-Drucksensors 1 ist eine Steuereinheit 4 vorgesehen. Die in der Steuereinheit 4 enthaltenen und nachfolgend beispielhaft erläuterten Komponenten können sowohl als eine Hardware mit entsprechenden Schaltungen, als auch softwareseitig ausgeführt sein.

Die Steuereinheit 4 enthält einen Temperatur-Kalibrier-Speicher 5 mit einer Temperatur-Kalibrierfunktion m1 und einen Leistungs-Kalibrierspeicher 6 mit einer Leistungs-Kalibrierfunktion m2. Die Temperatur-Kalibrierfunktion m1 und die Leistungs-Kalibrierfunktion m2 entsprechen dabei im Wesentlichen den Kurven m1 und m2 in den Figuren 5 und 6. Weiterhin ist ein Umschaltmittel 7 vorgesehen, bei dem die Steuereinheit 4 zum einen im Messmodus M1 oder im Messmodus M2 betrieben werden kann und einen optimalen Bereich zur elektronischen Ansteuerung und Auswertung aufweist.

Die Steuereinheit 4 enthält außerdem eine Messeinheit 8 für die Temperatur des Messwiderstandes 2. Diese ist in der Regel als eine Widerstandsmesseinheit ausgeführt, wobei der mit dieser Widerstandsmesseinheit ermittelte Wert des elektrischen Widerstandes R des Messwiderstandes 2 in eine Temperatur überführt wird.

Die Steuereinheit 4 enthält weiterhin eine Leistungssteuereinheit 9, über die eine Regulierung der Leistungszufuhr an den Messwiderstand 2 erfolgt. Außerdem ist eine Messeinheit 10 vorgesehen, in der der Messablauf des Messmodus M1 gespeichert ist und die den Messmodus M1 steuert, sowie eine Messeinheit 11, die den Ablauf des Messmodus M2 enthält und die den Ablauf des Messmodus M2 steuert. Die Messeinheiten 10 und 11, die Umschalteinheit 7, die Kalibrierspeicher 5 und 6 können entweder einzeln oder sämtlich als Software, d.h. als ein Programmcode ausgeführt sein.

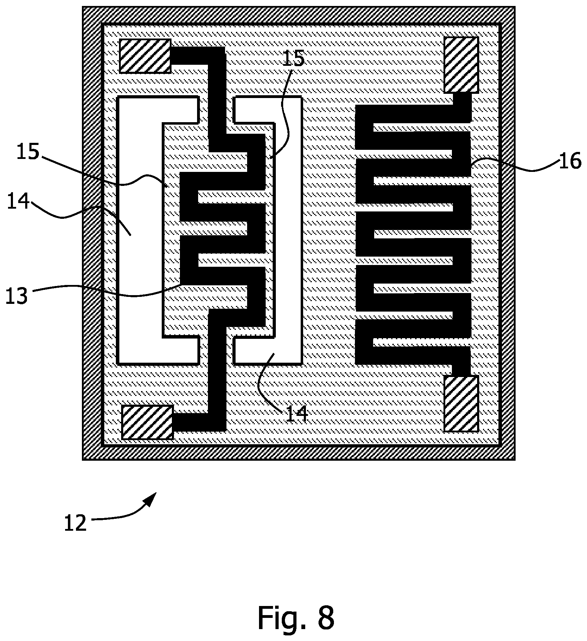

Fig. 8 zeigt einen beispielhaften MEMS-Chip 12 als Ausführungsform für einen Pirani-Drucksensor. Der MEMS-Chip enthält eine erste Leiterbahn 13 für den Messwiderstand und eine die Leiterbahn umgebende Cavität 14, die einen unmittelbaren Anschluss an das umgebende Vakuum hat. Die Cavität 14 bildet das umgebende Messvolumen für die Leiterbahn 13. Die Leiterbahn 13 ist in der Regel auf einer Membran aufgebracht und "frei schwebend" in der Cavität 14 aufgehängt.

Durch eine dünne Wand 15 der Membran ist die Leiterbahn 13 des Messwiderstandes von der Cavität 14 getrennt.

Der MEMS-Chip weist außerdem einen Referenzwiderstand 16 auf, mit dem sich die Temperatur des Chips unabhängig und On-Chip bestimmen lässt. Dieser dient außerdem der Bestimmung einer Umgebungstemperatur des Mediums in der Umgebung des Messwiderstandes. Gegebenenfalls wird die von dem Referenzwiderstand gemessene Umgebungstemperatur der fixierten Maximaltemperatur Tmax den oben erwähnten Steuerungsabläufen zugrunde gelegt. Damit kann die Steuerung der Messanordnung des Pirani-Drucksensors unmittelbar auf veränderte Temperaturen im Medium des Vakuums reagieren. Der MEMS-Chip befindet sich beispielsweise auf einem Silizium-Substrat und ist in einem TO-Gehäuse untergebracht.

Das Verfahren und die Anordnung zum Ausführen des Verfahrens wurden anhand von Ausführungsbeispielen erläutert. Im Rahmen fachmännischen Handelns sind weitere Ausgestaltungen möglich. Weitere Ausführungsformen ergeben sich außerdem aus den Unteransprüchen.

### Bezugszeichenliste

- M1: erster Messmodus
- m1: Temperatur-Kalibrierfunktion
- M2: zweiter Messmodus
- m2: Leistungs-Kalibrierfunktion
- P: elektrische Leistung
- Pmax: Maximalleistung
- R: elektrischer Widerstand
- T: Temperatur
- Tmax: Maximaltemperatur
- U: Übergangsbereich
- 1: Pirani-Drucksensor
- 2: Messwiderstand
- 3: Messvolumen
- 4: Steuereinheit
- 5: Temperatur-Kalibrierspeicher
- 6: Leistungs-Kalibrierspeicher
- 7: Umschaltmittel
- 8: Messeinheit
- 9: Leistungssteuereinheit
- 10: Messeinheit für Messmodus M1
- 11: Messeinheit für Messmodus M2
- 12: MEMS-Chip
- 13: Leiterbahn für Messwiderstand
- 14: Cavität
- 15: Wand
- 16: Referenzwiderstand

## Patentansprüche

1. Verfahren zum Betreiben eines Pirani-Drucksensors (1) mit einem Messwiderstand (2) und einem den Messwiderstand umgebenden Messvolumen (3), wobei der Messwiderstand mit einer elektrischen Leistung (P) beaufschlagt wird und sich eine Gleichgewichtstemperatur des Messwiderstandes (2) im Medium des Messvolumens einstellt,
wobei
durch eine Steuereinheit (4) bei der Druckmessung ein Umschalten zwischen einem ersten Messmodus (M1) und einem zweiten Messmodus (M2) ausgeführt wird, wobei in dem ersten Messmodus (M1) eine Beaufschlagung des Messwiderstands mit einer definierten Maximalleistung (Pmax) erfolgt, wobei die Temperatur (T) des Messwiderstands als Messgröße des zu bestimmenden Druckes ermittelt wird und in dem zweiten Messmodus (M2) die Temperatur (T) des Messwiderstands auf einer Maximaltemperatur (Tmax) fixiert wird, wobei die zur Aufrechterhaltung der Maximaltemperatur (Tmax) erforderliche Leistung (P) als Messgröße des zu bestimmenden Druckes ermittelt wird.

2. Verfahren nach Anspruch 1
**dadurch gekennzeichnet, dass**
während des Betriebs des Pirani-Drucksensors eine Maximierung des druckabhängigen Messsignals erfolgt, indem der Pirani-Drucksensor in dem ersten Messmodus (M1) und/oder in dem zweiten Messmodus (M2) an einer jeweils gerätemäßig definierten Zerstörungsgrenze betrieben wird, wobei die Zerstörungsgrenze in dem ersten Messmodus (M1) mit der fixierten Maximalleistung (Pmax) am Messwiderstand (2) und die Zerstörungsgrenze in dem zweiten Messmodus (M2) mit der fixierten Maximaltemperatur (Tmax) am Messwiderstand (2) übereinstimmt.

3. Verfahren nach Anspruch 1 oder 2,
**gekennzeichnet durch**
folgende einregulierende Verfahrensschritte
- Verändern des Drucks innerhalb des Messvolumens (3) mit gleichzeitiger Erhöhung der elektrischen Leistungszufuhr an den Messwiderstand (2) und einer Messung der Temperatur (T) im Messwiderstand,
- Betriebsteuerung des Messwiderstands mittels einer Steuereinheit (4) bis zum Erreichen eines Schwellzustands mit einer definierten Maximaltemperatur (Tmax) und/oder einer definierten zugeführten Maximalleistung (Pmax) mit dem ersten Messmodus (M1) oder dem zweiten Messmodus (M2), wobei
- Bei dem ersten Messmodus (M1) in einem ersten Druckbereich bei Erreichen der Maximalleistung (Pmax) die Leistungszufuhr auf den Maximalwert (Pmax) fixiert wird und der Druck im Messvolumen über eine Messung der Temperatur (T) im Messwiderstand als druckabhängige Messgröße (G) bestimmt wird und
- Ein Umschalten in den zweiten Messmodus (M2) erfolgt, wenn in dem Messwiderstand die Temperatur (T) die Maximaltemperatur (Tmax) erreicht, wobei in dem zweiten Messmodus die Temperatur (T) auf die Maximaltemperatur (Tmax) fixiert wird und die bei dieser Maximaltemperatur (Tmax) jeweils an den Messwiderstand zugeführte Leistung (P) als druckabhängige Messgröße bestimmt wird.

4. Verfahren nach einem der Ansprüche 1 bis 3,
**dadurch gekennzeichnet, dass**
der erste Messmodus (M1) bei einem höheren ersten Druckbereich und der zweite Messmodus (M2) bei einem niedrigeren zweiten Druckbereich ausgeführt wird, wobei durch die Steuereinheit ein selbsttätiges Umschalten zwischen dem ersten Messmodus (M1) und dem zweiten Messmodus (M2) erfolgt, wobei die Druckbereiche und das Umschalten in beide Richtungen durchfahrbar sind.

5. Verfahren einem der vorhergehenden Ansprüche,
**dadurch gekennzeichnet, dass**
durch die Steuereinheit (4) beim Durchfahren der Druckbereiche in einem Übergangsbereich U der erste Messmodus (M1) oder der zweite Messmodus (M2) ausgeführt wird, wobei in Abhängigkeit von der durchfahrenen Richtung innerhalb des Übergangsbereiches U eine Umschalthysterese realisiert wird.

6. Verfahren nach einem der vorhergehenden Ansprüche,
**dadurch gekennzeichnet, dass**
als Pirani-Drucksensor (1) eine Anordnung aus einem MEMS-Chip (12) mit einem auf der MEMS-Chip (12) angeordneten Cavität (14) als Messvolumen und einer ersten Leiterstruktur (13) als Messwiderstand verwendet wird.

7. Anordnung zum Betreiben eines Pirani-Drucksensors (1), mit einem Messwiderstand (2), einem den Bereich des Messwiderstandes (2) mindestens teilweise umgebenden Messvolumen, einer Steuereinheit (4) zur Betriebssteuerung des Messwiderstandes, enthaltend eine Steuerung zur elektrischen Leistungsbeaufschlagung des Messwiderstandes, eine Messeinheit zum Erfassen des Widerstandswertes des Messwiderstandes (2) mit einem ersten Temperatur-Kalibrier-Speicher (5) für eine gespeicherte Temperatur-Kalibrierfunktion (m1) zum Umsetzen des Widerstandswertes in einem Temperaturwert und des Temperaturwertes in einen Wert für einen Messdruck bei einer vorgegebenen Leistungsbeaufschlagung,
wobei
die Steuereinheit (4) eine Leistungs-Messeinheit für eine an den Messwiderstand (2) beaufschlagte elektrische Leistung, einen Leistungs-Kalibrier-Speicher (6) mit einer gespeicherten Leistungs-Kalibrierfunktion (m2) zum Umsetzen einer bei einer festen Temperatur zugeführten elektrischen Leistung in einen Messdruck enthält,
wobei die Steuereinheit ein Umschaltmittel (7) zwischen einer Druckmessung über die Temperatur-Kalibrierfunktion (m1) und einer Druckmessung über die Leistungs-Kalibrierfunktion (m2) aufweist.

8. Anordnung nach Anspruch 7,
**dadurch gekennzeichnet, dass**
die Steuereinheit (4) einen Programmcode zum Realisieren der Temperatur-Kalibrierfunktion (m1), der Leistungs-Kalibrierfunktion (m2), Druckberechnung und/oder des Umschaltmittels (7) aufweist.

9. Anordnung nach einem der Ansprüche 7 und 8,
**dadurch gekennzeichnet, dass**
der Pirani-Drucksensor (1) als ein MEMS-Chip (12) ausgebildet ist, bei dem der Messwiderstand als eine erste Leiterbahn (13), eine zu der ersten Leiterbahn benachbarte Cavität (14) als ein Messvolumen und eine zweite Leiterbahn als ein Referenzthermometer (16) vorgesehen ist.

## Claims

1. Method for operating a Pirani pressure sensor (1) having a measurement resistor (2) and a measurement volume (3) surrounding the measurement resistor, wherein the measurement resistor is subjected to an electrical power (P) and an equilibrium temperature of the measurement resistor (2) results in the medium of the measurement volume,
wherein switching between a first measurement mode (M1) and a second measurement mode (M2) is executed by a control unit (4) during the pressure measurement, wherein in the first measurement mode (M1), the measurement resistor is subjected to a defined maximum power (Pmax), wherein the temperature (T) of the measurement resistor is determined as the measured variable of the pressure to be determined and in the second measurement mode (M2), the temperature (T) of the measurement resistor is fixed at a maximum temperature (Tmax), wherein the power (P) required to maintain the maximum temperature (Tmax) is determined as the measured variable of the pressure to be determined.

2. Method as claimed in claim 1,
**characterized in that**
during the operation of the Pirani pressure sensor, the pressure-dependent measurement signal is maximized **in that** the Pirani pressure sensor is operated in the first measurement mode (M1) and/or in the second measurement mode (M2) at a destruction limit defined in each case with respect to the device, wherein the destruction limit in the first measurement mode (M1) corresponds with the fixed maximum power (Pmax) at the measurement resistor (2) and the destruction limit in the second measurement mode (M2) corresponds to the fixed maximum temperature (Tmax) at the measurement resistor (2).

3. Method as claimed in claim 1 or 2,
**characterized by** the following regulating method steps
- changing the pressure within the measurement volume (3) while simultaneously increasing the electrical power supply to the measurement resistor (2) and measuring the temperature (T) in the measurement resistor,
- operational control of the measurement resistor by means of a control unit (4) until reaching a threshold state having a defined maximum temperature (Tmax) and/or a defined supplied maximum power (Pmax) using the first measurement mode (M1) or the second measurement mode (M2), wherein
- in the first measurement mode (M1) in a first pressure range, upon reaching the maximum power (Pmax), the power supply is fixed at the maximum value (Pmax) and the pressure in the measurement volume is determined via a measurement of the temperature (T) in the measurement resistor as a pressure-dependent measured variable (G) and
- a switch to the second measurement mode (M2) takes place when the temperature (T) in the measurement resistor reaches the maximum temperature (Tmax), wherein in the second measurement mode, the temperature (T) is fixed at the maximum temperature (Tmax) and the power (P) supplied to the measurement resistor at this maximum temperature (Tmax) is determined in each case as the pressure-dependent measured variable.

4. Method as claimed in any one of claims 1 to 3,
**characterized in that**
the first measurement mode (M1) is carried out in a higher first pressure range and the second measurement mode (M2) is carried out in a lower second pressure range, wherein independent switching between the first measurement mode (M1) and the second measurement mode (M2) is carried out by the control unit, wherein the pressure ranges and the switching can be traversed in both directions.

5. Method as claimed in any one of the preceding claims,
**characterized in that**
the first measurement mode (M1) or the second measurement mode (M2) is carried out by the control unit (4) upon the traversal of the pressure ranges in a transition range U, wherein a switching hysteresis is implemented depending on the traversed direction within the transition range U.

6. Method as claimed in any one of the preceding claims,
**characterized in that**
an arrangement made up of a MEMS chip (12) having a cavity (14) arranged on the MEMS chip (12) as a measurement volume and a first conductor structure (13) as a measurement resistor is used as the Pirani pressure sensor (1).

7. Arrangement for operating a Pirani pressure sensor (1), having a measurement resistor (2), a measurement volume at least partially surrounding the area of the measurement resistor (2), a control unit (4) for the operational control of the measurement resistor, containing a controller for subjecting the measurement resistor to electrical power, a measurement unit for detecting the resistance value of the measurement resistor (2) having a first temperature calibration memory (5) for a stored temperature calibration function (m1) for converting the resistance value into a temperature value and the temperature value into a value for a measurement pressure at a predetermined application of power,
wherein
the control unit (4) contains a power measurement unit for an electrical power applied to the measurement resistor (2), a power calibration memory (6) having a stored power calibration function (m2) for converting an electrical power supplied at a fixed temperature into a measurement pressure,
wherein the control unit has a switching means (7) between a pressure measurement via the temperature calibration function (m1) and a pressure measurement via the power calibration function (m2).

8. Arrangement as claimed in claim 7,
**characterized in that**
the control unit (4) has a program code for implementing the temperature calibration function (m1), the power calibration function (m2), pressure calculation, and/or the switching means (7).

9. Arrangement as claimed in any one of claims 6 to 8,
**characterized in that**
the Pirani pressure sensor (1) is designed as a MEMS chip (12), in which the measurement resistor is provided as a first conductor track (13), a cavity (14) adjacent to the first conductor track is provided as a measurement volume, and a second conductor track is provided as a reference thermometer (16).

## Revendications

1. Procédé de fonctionnement d'un capteur de pression de Pirani (1) comprenant une résistance de mesure (2) et un volume de mesure (3) entourant la résistance de mesure, la résistance de mesure étant alimentée en puissance électrique (P), et une température d'équilibre de la résistance de mesure (2) s'établissant dans le milieu du volume de mesure,
dans lequel
une unité de commande (4) assure, lors de la mesure de pression, une commutation entre un premier mode de mesure (M1) et un deuxième mode de mesure (M2), sachant que, dans le premier mode de mesure (M1), la résistance de mesure est alimentée en une puissance maximale définie (Pmax), la température (T) de la résistance de mesure est déterminée comme grandeur de mesure de la pression à définir et, dans le deuxième mode de mesure (M2), la température (T) de la résistance de mesure est fixée à une température maximale (Tmax), la puissance (P) nécessaire au maintien de la température maximale (Tmax) est déterminée comme grandeur de mesure de la pression à définir.

2. Procédé selon la revendication 1,
**caractérisé en ce que**, pendant le fonctionnement du capteur de pression de Pirani, on procède à une maximisation du signal de mesure dépendant de la pression en faisant fonctionner le capteur de pression de Pirani dans le premier mode de mesure (M1) et/ou dans le deuxième mode de mesure (M2) à une limite de destruction respective définie par l'appareillage, sachant que la limite de destruction dans le premier mode de mesure (M1) coïncide avec la puissance maximale fixée (Pmax) au niveau de la résistance de mesure (2) et que la limite de destruction dans le deuxième mode de mesure (M2) coïncide avec la température maximale fixée (Tmax) au niveau de la résistance de mesure (2).

3. Procédé selon la revendication 1 ou 2,
**caractérisé par** les étapes de régulation suivantes consistant à :
- modifier la pression à l'intérieur du volume de mesure (3) tout en augmentant simultanément l'alimentation en puissance électrique de la résistance de mesure (2) et en mesurant la température (T) dans la résistance de mesure,
- commander le fonctionnement de la résistance de mesure au moyen d'une unité de commande (4) jusqu'à atteindre un état de seuil avec une température maximale définie (Tmax) et/ou une puissance maximale fournie définie (Pmax) dans le premier mode de mesure (M1) ou le deuxième mode de mesure (M2), sachant que
- dans le premier mode de mesure (M1), dans une première plage de pression, lorsque la puissance maximale (Pmax) est atteinte, l'alimentation en puissance est fixée à la valeur maximale (Pmax), et la pression dans le volume de mesure est définie par une mesure de la température (T) dans la résistance de mesure comme grandeur de mesure dépendante de la pression (G), et
- une commutation vers le deuxième mode de mesure (M2) a lieu lorsque la température (T) dans la résistance de mesure atteint la température maximale (Tmax), et dans le deuxième mode de mesure, la température (T) est fixée à la température maximale (Tmax) et la puissance respective (P) fournie à la résistance de mesure à cette température maximale (Tmax) est définie comme grandeur de mesure dépendante de la pression.

4. Procédé selon l'une des revendications 1 à 3,
**caractérisé en ce que** le premier mode de mesure (M1) est exécuté dans une première plage de pression plus élevée et le deuxième mode de mesure (M2) est exécuté dans une deuxième plage de pression plus basse, l'unité de commande assurant une commutation automatique entre le premier mode de mesure (M1) et le deuxième mode de mesure (M2), permettant le passage à travers les plages de pression et la commutation dans les deux sens.

5. Procédé selon l'une des revendications précédentes,
**caractérisé en ce que**, lors du passage à travers les plages de pression, dans une zone de transition U, l'unité de commande (4) exécute le premier mode de mesure (M1) ou le deuxième mode de mesure (M2), une hystérésis de commutation étant réalisée en fonction du sens de passage au sein de la zone de transition U.

6. Procédé selon l'une des revendications précédentes,
**caractérisé en ce qu'**on utilise comme capteur de pression de Pirani (1) un dispositif constitué d'une puce MEMS (12), ayant une cavité (14) disposée sur la puce MEMS (12) et servant de volume de mesure, et d'une première structure conductrice (13) servant de résistance de mesure.

7. Dispositif destiné à faire fonctionner un capteur de pression de Pirani (1), comprenant une résistance de mesure (2), un volume de mesure entourant au moins partiellement la zone de la résistance de mesure (2), une unité de commande (4) destinée à commander le fonctionnement de la résistance de mesure, comprenant une commande pour l'alimentation en puissance électrique de la résistance de mesure, une unité de mesure destinée à détecter la valeur de résistance de la résistance de mesure (2) et munie d'une première mémoire d'étalonnage en température (5) pour une fonction d'étalonnage en température (m1) enregistrée, permettant de convertir la valeur de résistance en une valeur de température et la valeur de température en une valeur de pression de mesure lors d'une alimentation en puissance prédéfinie,
dans lequel
l'unité de commande (4) comprend une unité de mesure de puissance pour la puissance électrique appliquée à la résistance de mesure (2), une mémoire d'étalonnage en puissance (6) contenant une fonction d'étalonnage en puissance (m2) enregistrée, permettant de convertir une puissance électrique, fournie à une température fixe, en une pression de mesure,
l'unité de commande comporte un moyen de commutation (7) entre une mesure de pression via la fonction d'étalonnage en température (m1) et une mesure de pression via la fonction d'étalonnage en puissance (m2).

8. Dispositif selon la revendication 7,
**caractérisé en ce que** l'unité de commande (4) comporte un code de programme pour la mise en œuvre de la fonction d'étalonnage en température (m1), de la fonction d'étalonnage en puissance (m2), du calcul de pression et/ou du moyen de commutation (7).

9. Dispositif selon l'une des revendications 7 et 8,
**caractérisé en ce que** le capteur de pression de Pirani (1) est réalisé sous la forme d'une puce MEMS (12), dans laquelle la résistance de mesure est prévue sous la forme d'une première piste conductrice (13), une cavité (14) adjacente à la première piste conductrice est prévue sous la forme d'un volume de mesure, et une deuxième piste conductrice est prévue sous la forme d'un thermomètre de référence (16).
